# EUROPÄISCHE PATENTSCHRIFT

(11) **EP 2 511 146 B1**
(45) Veröffentlichungstag und Bekanntmachung des Hinweises auf die Patenterteilung: **24.01.2018**
(21) Anmeldenummer: 12159158.0
(22) Anmeldetag: 13.03.2012
(51) Int. Cl.: B60T 17/22, B60T 7/12, B60T 13/66

(54) **Automatische Bremsüberwachung**
Automatic brake monitoring
Surveillance de freinage automatique

(30) Priorität: 22.03.2011 AT 4062011
(43) Veröffentlichungstag der Anmeldung: 17.10.2012
(73) Patentinhaber: ÖBB - Technische Services GmbH, 1110 Wien (AT)
(72) Erfinder: Pröll, Alexander, 4060 Leonding (AT); Reiter, Bartolomäus, 4863 Seewalchen (AT); Mayrhofer, Thomas, 4084 St. Agatha (AT)
(74) Vertreter: Puchberger & Partner Patentanwälte

(56) Entgegenhaltungen:
- DE-A1- 19 833 279
- US-A1- 2010 094 489
- US-A1- 2010 194 186

## Beschreibung

Die Erfindung betrifft eine Vorrichtung zur automatischen Überwachung und Steuerung der pneumatischen Bremssysteme von Fahrzeugen, sowie Verfahren zur Überwachung der pneumatischen Bremssysteme von abgestellten und im Schleppbetrieb befindlichen Fahrzeugen mit dieser Vorrichtung.

Vor allem im Bahnbetrieb und bei Lastkraftwagen sind Druckluftbremsen als Betriebs- und/oder Feststellbremsen gebräuchlich. Dabei wird Druckluft sowohl als Energieträger zum Anpressen der Bremsklötze auf die Lauffläche oder Bremsscheiben von Rädern, als auch zur Steuerung des Bremsvorgangs verwendet. Prinzipiell besteht eine derartige Druckluftbremse aus einem System von Druckluftbehältern, Bremszylindern, Steuerelementen und Druckluftleitungen an jedem Fahrzeug, die bei der Zusammenstellung eines Zuges an den Koppelstellen miteinander verbunden werden.

Alle Fahrzeuge eines Zuges haben eine durchgehende, miteinander verbundene Hauptluftleitung (HLL) und zusätzlich bei Reisezugwagen eine durchgehende Hauptbehälterluftleitung (HBL). Ein Kompressor am Triebfahrzeug versorgt einen Hauptluftbehälter mit Druckluft, der für den Betrieb der Bremse, sowie für alle pneumatischen Steuereinrichtungen und Verbraucher der Lokomotive und des Zuges, die notwendige Druckluft bereitstellt. Die Versorgung des Zuges wird bei Personenwagen über die durchgehende Hauptbehälterluftleitung HBLL und/oder durchgehende Hauptluftleitung HLL (wie bei einem Güterzug) sichergestellt. Die Steuerung der "selbsttätigen indirekt wirkenden Druckluftbremse" aller angeschlossenen Wagen wird über die HLL gesteuert. Von der HBL wird diese Hauptluftleitung (HLL) über das Führerbremsventil bzw. der HL-Steuereinheit am Triebfahrzeug mit Druckluft versorgt, welche üblicherweise einen Druck von 5bar (der Regeldruck) aufweist. Die Hauptluftleitung (HLL) dient neben der Hauptbehälterleitung (HBL) als Energieversorger und zur Steuerung bzw. Regelung der Bremse.

Jedes Fahrzeug hat zudem einen Hilfsluftbehälter, der ständig über ein Rückschlagventil von der Hauptluftleitung (HLL) und/oder Hauptbehälterluftleitung (HBL) nachgefüllt wird, sowie druckluftbetriebene Bremszylinder und Bremsklötze an den Rädern bzw. Scheibenbremsen im Rad oder auf der Achswelle. Das prinzipielle Steuerelement für die Bremsanlage ist das "Führerbremsventil" auf dem Triebfahrzeug bzw. der Lokomotive.
Eine derartige Druckluftbremse kann entweder direkt-wirkend oder indirekt-wirkend ausgeführt werden.

Die indirekt-wirkende Druckluftbremse ist gelöst (inaktiv), wenn alle Hilfsluftbehälter gefüllt sind und in der Hauptluftleitung der Regelbetriebsdruck herrscht. Wird der Druck in der Hauptluftleitung abgesenkt, so leiten die Steuerventile die Druckluft mittels Druckübersetzer aus den Hüfsluftbehältern in die Bremszylinder (sogenannter C-Druck), die darauf über ein Bremsgestänge die Bremsklötze an die Räder oder Bremsscheiben drücken bzw. die Bremszangen der Scheibenbremsen betätigen. Die Bremsanlage ist so dimensioniert, dass bei einer Absenkung des Druckes der Hauptluftleitung auf etwa 3,5 bar (Vollbremsung) sowie bei einer vollständig entleerten Hauptluftleitung (0 bar bei einer Schnell-, Not- oder Zwangsbremsung) in den Bremszylindern der entsprechende Druck je nach Bremsart ansteht. Nach einem Bremsvorgang erfolgt das Lösen der Bremse durch das Wiederauffüllen der Hauptluftleitung auf den Regelbetriebsdruck von 5 bar. Die Steuerventile gehen dadurch in ihre Ausgangsstellung zurück, die Luft aus den Bremszylindern entweicht ins Freie, die Bremsklötze lösen sich, und die Hilfsluftbehälter werden gefüllt.

Die direkt-wirkende Druckluftbremse wirkt nur auf das Triebfahrzeug. In der Bremsstellung ist das zuständige Bremsventil spannungslos und lässt so direkt von der Hauptbehälterleitung (HBL) über ein Druckminderventil und einem Doppelrückschlagventil Druckluft zu den beiden Druckübersetzern (z.B. bei LR 1016/1116 "KR-5") strömen. Mit dem Lösebefehl wird das zuständige Löseventil angesteuert und diese Leitung wieder entlüftet. Über ein Rückschlagventil werden von der HBL diese Bremssysteme versorgt, wobei durch einen Vorratsbehälter je Drehgestell, Druckluft für die Bremse gespeichert wird.

Darüber hinaus verfügen Schienenfahrzeuge und Lastkraftwagen oft über eine Feststellbremse, welche in Form einer Federspeicherbremse ausgeführt ist. Dabei wird durch Federdruck im Bremszylinder der Festhaltebremse eine Bremswirkung erzielt. Diese Bremswirkung kann durch Luftdruck oder mechanischer Entriegelung im Federspeicherbremszylinder wieder aufgehoben werden.

Beim Lösen der Federspeicherbremse wird das Löseventil des Federspeicherwechselventils angesteuert. Dadurch strömt Druckluft aus der Hauptbehälterleitung HBL über ein Druckminderventil in den Federspeicherbremszylinder und löst die Federspeicherbremse durch Aufhebung der Federdruckkraft aus.

Werden die Federspeicherbremsen wieder angelegt, so werden durch das Ansteuern des Löseventils am Federspeicherwechselventil die Federspeicherbremszylinder wieder entlüftet. Durch die Federkraft werden die Federspeicherbremsen wieder gesetzt. Auch hier wird bei der Federspeicherbremse von der HBL über ein Rückschlagventil dieses System versorgt und in einem Vorratsbehälter Druckluft für das Lösen der Bremsen gespeichert.

Ein wesentliches Problem im Betrieb von Fahrzeugen, die mit derartigen pneumatischen Bremssystemen ausgerüstet sind, besteht darin, dass einerseits bei abgestellten Fahrzeugen auf das Anlegen der Feststellbremse vergessen wird, oder diese defekt ist, wodurch es zu einem Entrollen kommen kann. Ein weiteres Problem besteht darin, dass bei Schleppfahrten ungewolltes Anlegen der Feststellbremse passieren kann, wodurch die Räder und die Bremse selbst beschädigt werden. Die Feststellbremse wird bei Schleppfahrten zwar gelöst, aber nicht permanent überwacht. Ein plötzliches Anlegen einer pneumatischen Federspeicherbremse kann beispielsweise auch durch Druckverlust im Federspeichersystem (Schlauchbruch, undichte Stellen) oder durch menschliche Fehlbedienung (versehentlich abgesperrter Schlepphahn) erfolgen, was im Allgemeinen nicht erkannt wird.

Die US 2010/194186 A1 beschreibt eine gattungsgemäße Vorrichtung, bei der ein den Luftdruck der Bremssysteme durch Drucksensoren überwachendes Pneumatikmodul und ein damit verbundenes, ein oder mehrere Bremssysteme ansteuerndes Steuermodul vorgesehen ist, welches zum Empfang von GPS-Positionsdaten ausgeführt ist. Diese Vorrichtung ist jedoch nicht geeignet, den Zustand eines Fahrzeugs jederzeit und über sehr lange Zeiträume zu überwachen, da der vorgeschlagene GPS-Empfänger abhängig vom Satellitenempfang ist und eine kontinuierliche Energieversorgung benötigt.

Es ist demnach Aufgabe der Erfindung, eine automatische Überwachungs- und Steuerungsvorrichtung der pneumatischen Bremssysteme von Fahrzeugen zu schaffen, welche die obigen Nachteile verhindert. Insbesondere soll der Zustand der Feststellbremse über sehr lange Zeiträume hinweg überprüft und gesteuert werden können, um im Fall des abgestellten Fahrzeugs ein Entrollen, und im Schleppzustand ein ungewolltes Anlegen der Feststellbremse zu verhindern.

Diese Aufgabe wird erfindungsgemäß durch eine Vorrichtung gemäß Anspruch 1 gelöst.

Durch den Empfang von Positionsdaten (beispielsweise GPS-Daten) kann insbesondere im Fall der Überwachung des abgestellten Fahrzeugs eine zuverlässige Detektion einer Positionsänderung erfolgen, und die entsprechenden Schritte veranlasst werden. Dies kann sowohl das versehentliche Entrollen, als auch die Detektion eines Abschleppvorgangs umfassen. Für diese Aufgabe kann auch ein Beschleunigungssensor vorgesehen sein, der auch dann Entrollen detektiert, wenn der GPS-Empfang nicht möglich ist, beispielsweise in einem Tunnel oder bei überdachtem bzw. unterirdischem Bahnhof.

Bei den überwachten Bremssystemen kann es sich insbesondere um eine Luftdruckbremse (Betriebsbremse) und eine Federspeicherbremse (Feststellbremse) handeln, und das Pneumatikmodul kann den Druck dieser Bremssysteme und den Druck einer Hauptluftleitung durch Drucksensoren aufnehmen. Weiters kann das Steuermodul erfindungsgemäß eine die Federspeichersteuerung ansteuernde Signalleitung umfassen, um direkt den Zustand der Federspeicherbremse steuern zu können.

Das Pneumatikmodul kann weiters ein, die Hauptluftleitung entlüftendes, durch das Steuermodul ansteuerbares Notbremsventil umfassen, um im Gefahrfall (Entrollen, etc.) eine sofortige Zwangsbremsung durchführen zu können.

Es kann weiters erfindungsgemäß vorgesehen sein, dass die Vorrichtung einen deaktivierender Absperrhahn umfasst. Das Steuermodul kann insbesondere als speicherprogrammierbare Steuerung ausgeführt sein. Dieses kann sowohl analoge als auch digitale Ein- und Ausgänge aufweisen.

Erfindungsgemäß umfasst die Vorrichtung einen Beschleunigungssensor oder Bewegungssensor sowie einen elektronischen Kompass, um auch im Fall dass keine GPS-Daten vorliegen eine Positionsänderung detektieren zu können. Das Steuermodul kann vorteilshaft mit einem Meldesystem am Fahrzeug verbunden oder verbindbar sein.

Es ist insbesondere vorgesehen, dass das Steuermodul eine CPU-Box umfasst, welche zumindest ein Mittel zur Datenübertragung wie GSM-Modul, USB-Anschluss, Netzwerkanschluss, RS232-Schnittstelle, RS485-Schnittstelle, oder Busschnittstelle aufweist. Die CPU-Box oder das Steuermodul kann zumindest einen Antennenanschluss zur Verbindung mit einer GPS- und/oder GSM-Antenne umfassen.

Die genannte Busschnittstelle der CPU-Box kann insbesondere zur Verbindung mit einer externen DFÜ-Einheit ausgeführt sein. Es ist aber auch eine direkte Verbindung des Steuermoduls mit einer externen DFÜ-Einheit über ein anderes Mittel zur Datenübertragung Teil der Erfindung. Die CPU-Box kann auch zur Verbindung mit externen Systemen wie beispielsweise Systemen zur Fahrwerk Diagnose und Überwachung (FDÜ-Systemen) vorgesehen sein.

Insbesondere ist vorgesehen, dass das Steuermodul der Vorrichtung ein eigenes GSM-Modul umfassen kann, welches SMS zu Warn- und Informationszwecken verschicken und Befehle per SMS erhalten kann. Selbstverständlich kann das GSM-Modul auch andere Mobilkommunikationsstandards wie HSCSD, GPRS, UMTS, etc. zu diesem Zweck nutzen, und statt der SMS kann die Nachricht auch auf anderem Weg, beispielsweise als Email, versendet werden.

Weiters umfasst die Erfindung auch ein Verfahren nach Anspruch 6 zur Überwachung und Steuerung der Bremssysteme zur Entrollsicherung von abgestellten Fahrzeugen mit einer erfindungsgemäßen Vorrichtung, wobei das Verfahren folgende Schritte umfasst:
a. Nach Abschalten der Loksteuerung erfolgt permanente Überwachung der Batteriespannung, der Bremssysteme sowie Empfang und Überwachung von Positionsdaten;
b. beim Abschalten der Batteriekreise automatisches Entlüften für 3 Sekunden der Hauptluftleitung und, wenn nach dieser Zeitspanne die Federspeicherbremse nicht aktiviert ist, Aktivieren der Federspeicherbremse;
c. bei Entrollen sofortige Zwangsbremsung durch Entlüften der Hauptluftleitung;
d. wenn nach einer vordefinierten Zeit ab dem Abschalten der Loksteuerung Bremssysteme nicht aktiviert sind, erfolgt sofortige Zwangsbremsung durch Entlüften der Hauptluftleitung.

Nach einer Zwangsbremsung kann je nach Ursache des Ereignisses ein Meldesystem bzw. Informationssystem mit allen wichtigen Betriebsdaten oder bei einem Entrollen des Fahrzeuges ein Wamsystem, durch Absenden von E-Mails oder SMS an die betroffenen Stellen aktiviert werden, bzw. eine Alarmkette ausgelöst werden. Das Entrollen des Fahrzeugs kann durch Überwachen von Positionsdaten, beispielsweise mittels GPS, und/oder durch einen Beschleunigungs- bzw. Bewegungssensor festgestellt werden. Beim Entrollen kann zusätzlich eine optische Warnmeldung am Fahrzeug durch das Ansteuern der Scheinwerfer, sowie eine akustische Wammeldung durch das Ansteuern der Makrophon-Hömer abgegeben werden.

Im erfindungsgemäßen Verfahren kann weiters vorgesehen sein, dass eine Zwangsbremsung durch Entlüften der Hauptluftleitung erfolgt, wenn 60 Sekunden nach dem Abschalten der Loksteuerung ein Bremssystem, insbesondere die Federspeicherbremse (Feststellbremse) nicht angelegt ist.

Schließlich umfasst die Erfindung ein Verfahren zur Überwachung und Steuerung der Bremssysteme von Fahrzeugen im Schleppbetrieb mit einer erfindungsgemäßen Vorrichtung, bei dem nach einer Bremsprobe permanent der Luftdruck der pneumatischen Bremssysteme überwacht wird und eine Zwangsbremsung durch Entlüftung der Hauptluftleitung eingeleitet wird, wenn nach einer vordefinierten Zeitspanne zumindest eines der Bremssysteme aktiviert ist oder nicht vollständig gelöst ist.

In diesem erfindungsgemäßen Verfahren zur Sicherung beim Schleppbetrieb kann die Einleitung der Zwangsbremsung dann erfolgen, wenn 60 Sekunden nach der Bremsprobe aktivierte oder nicht vollständig gelöste Bremssysteme festgestellt werden.

Ein Teil der Erfindung ist, dass bei einer Zwangsbremsung im Schleppbetrieb, durch ein betriebliches Ereignis (SIFA oder Zugsicherung bzw. Notbremse bei einem Reisezug usw.) der Schleppbefehl nicht rückgesetzt wird, sodass die Federspeicherbremsen nicht ungewollt automatisch anlegen können. Weiters soll im Tunnelbereich einen Kilometer vor und einen Kilometer nach dem Tunnel die Ansteuerung des Notbremsventils durch das Steuermodul verhindert werden, wobei bei einem Ereignis das Meldesystem aufrecht zu halten ist, solange die GSM-Verbindung besteht.

Am Ende der Schleppfahrt kann durch eine gezielte Handlung des Lokführers, eine Senkung des Druckes der Hauptluftleitung unter 2,8 bar, ein Rücksetzen des Schleppbefehls und dadurch ein HL-gesteuertes Anlegen der Federspeicherbremse erfolgen. Auch durch Entlüften der HL beim abgestellten Fahrzeug (öffnen des Absperrhahnes der HLL) oder durch Betätigung der Federspeichertaste am Langträger, kann der Schleppbefehl rückgesetzt werden und dadurch das Anlegen der Federspeicherbremse ausgelöst werden. Nach dem Rücksetzen des Schleppbefehls, soll nach einer definierten Zeit die Verbindung zum Handy des Lokführers automatisch beendet werden

Sowohl beim erfindungsgemäßen Verfahren zur Entrollsicherung, als auch beim erfindungsgemäßen Verfahren zur Sicherung beim Schleppbetrieb kann die Batteriespannung überwacht werden und beim Erreichen eines definierten Grenzwertes eine Wammeldung abgesandt werden, wobei eines der oben genannten Mittel zur Datenübertragung eingesetzt werden kann. Beim Überschreiten eines definierten Grenzwertes werden alle Verbraucher (ausgenommen AFÜ) abgeschaltet. Unabhängig davon können in beiden Verfahren regelmäßig Daten mittels einer GPRS-Verbindung an einen Server gesendet werden, und bei bestimmten Ereignissen automatisch eine SMS-Nachricht, Email oder dergleichen an den Lokführer und zu einem Server gesendet werden.

Weitere erfindungsgemäße Merkmale sind der Beschreibung, den Ansprüchen und den Figuren zu entnehmen.

Die erfindungsgemäße Vorrichtung sowie die erfindungsgemäßen Verfahren werden nun anhand der folgenden Figuren verdeutlicht. Es zeigen
- Fig. 1:: ein Zugverband mit einer erfindungsgemäßen Vorrichtung;
- Fig. 2:: ein Blockschaltbild der erfindungsgemäßen Vorrichtung in Form einer automatischen Federspeicherüberwachung (AFÜ);
- Fig. 3:: ein Blockschaltbild der erfindungsgemäßen Vorrichtung in Form einer AFÜ mit einer externen DFÜ-Einheit;
- Fig. 4:: ein Zugverband mit zwei Triebfahrzeugen und erfindungsgemäßen Vorrichtungen;
- Fig.5:: ein Ausführungsbeispiel einer erfindungsgemäßen Vorrichtung in einem Triebfahrzeug;
- Fig. 6:: ein Ausführungsbeispiel eines erfindungsgemäßes Verfahren für die Ausführung der Loksteuerung;
- Fig. 7a:: ein Ausführungsbeispiel eines erfindungsgemäßen Verfahrens zur Entrollsicherung;
- Fig. 7b:: ein Ausführungsbeispiel eines erfindungsgemäßen Verfahrens zur Alarmierung und Bremsen eines entrollenden Fahrzeugs;
- Fig. 8a:: ein Ausführungsbeispiel eines erfindungsgemäßen Verfahrens für die Funktion "Federspeicher lösen vor Beginn der Schleppfahrt";
- Fig. 8b:: ein Ausführungsbeispiel eines erfindungsgemäßen Verfahrens für die Funktion "Schleppfahrt".

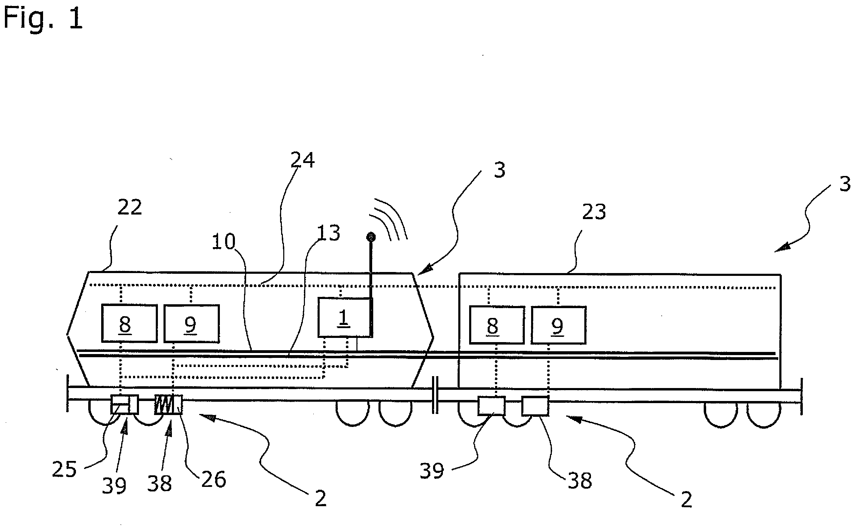

Fig. 1 zeigt einen Zugverband aus Fahrzeugen 3, insbesondere mit einem Triebfahrzeug 22 und einem daran gekoppelten Waggon 23. Das Triebfahrzeug und der Waggon verfügen unter anderem über die pneumatischen Bremssysteme 2 in Form einer Feststellbremse (Federspeicherbremse 38 mit Federspeicherbremszylinder 26) und einer Betriebsbremse (Druckluftbremse 39 mit Druckluftbremszylinder 25). Diese Bremssysteme werden durch Steuerungssysteme (Druckluftbremssteuerung 8, Federspeicherbremssteuerung 9) angesteuert. Weiters ist die durchgehende UIC-Leitung 24 und die Hauptluftleitung 10 sowie die Hauptbehälterleitung 13 ersichtlich. Bei der UIC-Leitung handelt es sich um ein genormtes Verbindungskabel, mit dem Daten und Befehle zwischen den Triebfahrzeugen und den Waggons eines Zuges ausgetauscht werden

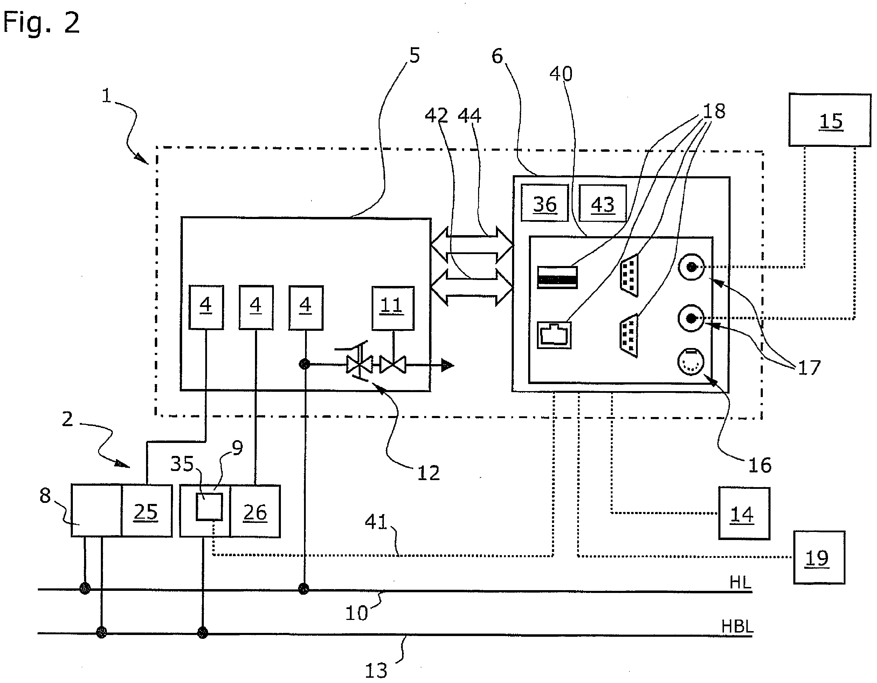

Fig. 2 zeigt ein Ausführungsbeispiel einer erfindungsgemäßen Vorrichtung 1 . Im vorliegenden Ausführungsbeispiel ist diese Vorrichtung als automatische Federspeicherüberwachung (AFÜ) ausgeführt. Diese umfasst ein Pneumatikmodul 5 und ein Steuermodul 6. Das Pneumatikmodul 5 umfasst Drucksensoren 4 zur Messung des Drucks der Hauptluftleitung 10, des Druckluftbremszylinders 25 und des Federspeicherbremszylinders 26. Weiters ist im Pneumatikmodul ein Absperrhahn 12 und ein Notbremsventil 11 vorgesehen, welches die Hauptluftleitung 10 entlüften kann. Das Pneumatikmodul 5 ist mit dem Steuermodul 6 verbunden. Das Herzstück der Anlage ist die CPU-Box 40 im Steuermodul 6, wo durch digitale und analoge Eingänge 42 Daten der Drucksensoren 4 oder digitale Informationen 44 wie "Batteriekreise ausgeschaltet" oder "Loksteuerung aktiv" eingelesen werden. Von dieser CPU-Box 40 sollen GPS-Signale empfangen werden, wodurch Positionsdaten 7 für die Auswertung der Software zu Verfügung gestellt werden. Dazu ist die CPU-Box 40 mit Antennenanschlüssen 17 für GSM- oder GPS-Antennen 15 ausgerüstet. Weiter ist auch in dieser CPU-Box ein Beschleunigungssensor (Bewegungssensor 36) sowie ein elektronischer Kompass 43 eingebaut, um eine Fahrzeugbewegung zu erkennen, sollte kein GPS-Signal empfangen werden. Optional sollten hier auch über galvanisch getrennte freie Analogeingänge, Signale der Loksteuerung eingelesen werden, um so ein schnelles Orten von z.B. flüchtigen Fehlern am Fahrzeug zu ermöglichen. Zur Übermittlung der Daten verfügt die CPU-Box über Mittel zur Datenübertragung 18 in Form von USB-Anschluss, Netzwerkanschluss, RS232 und RS485 Schnittstellen. Es ist weiters ein Meldesystem 14 (in Form akustischer und optischer Signale) angeschlossen und die Möglichkeit geschaffen, ein Terminal 19 an das Gerät anzuschließen. Zur Steuerung des Federspeicherwechselventils 35 ist eine Signalleitung 41 vorgesehen.

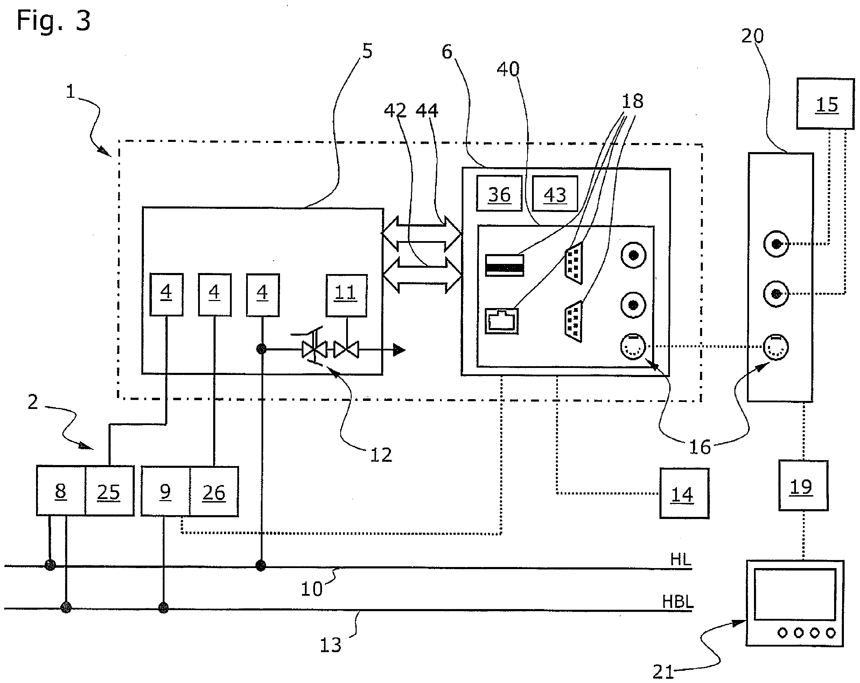

Die Busschnittstelle 16 in Form einer CAN-Busschnittstelle und eine Netzwerkanbindung sollen es ermöglichen, andere Systeme, wie beispielsweise eine Fahrwerksdiagnose und Überwachung (FDÜ) oder weitere Überwachungs- und Diagnosesysteme mit der Vorrichtung 1 zu verbinden. Dies ist in Fig. 3 gezeigt.

Fig. 3 zeigt ein Ausführungsbeispiel einer erfindungsgemäßen Vorrichtung 1 in Form einer automatischen Federspeicherüberwachung, die über die Busschnittstelle 16 mit einem weiteren Diagnose- und Überwachungssystem 20 verbunden ist. Bei der Anbindung mehrerer Systeme, wie z.B. die FDÜ (Fahrwerk-Diagnose und Überwachung) soll die Möglichkeit bestehen, die DFÜ für diese Systeme zu übernehmen. Weiters sollen Störmeldungen oder Informationen aus anderen Systemen, die über Netzwerk oder Bussystem angebunden sind, über DFÜ für diese Systeme übertragen werden. Ist unter anderem auch eine Bildschirmausgabe über einen Monitor 21 vorgesehen, könnten z.B. Störmeldungen, die über DFÜ von der geschleppten Lok empfangen werden, auf diesem Monitor angezeigt werden.

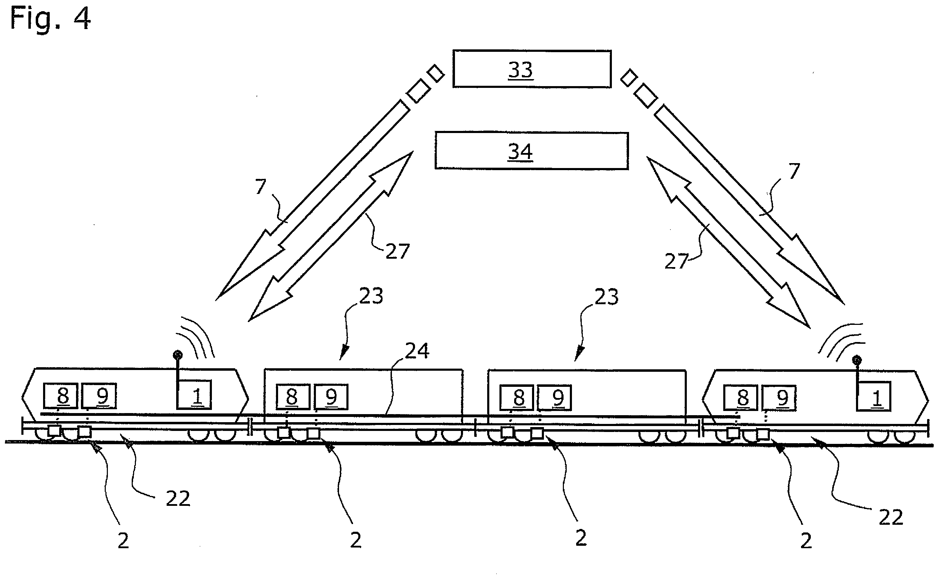

Fig. 4 zeigt einen Zugverband mit zwei Triebfahrzeugen 22 und Waggons 23. Die Fahrzeuge sind mit Druckluftbremssteuerungen 8 und Federspeicherbremssteuerungen 9 ausgerüstet und sind bei Personenzügen mit einer durchgehenden UIC-Leitung 24 verbunden. Beide Triebfahrzeuge verfügen über eine erfindungsgemäße Vorrichtung 1 zur Überwachung und Steuerung der Bremssysteme 2, welche Positionsdaten 7 von einem GPS-System 33 erhält - dabei kann es sich um einen oder mehrere GPS-Satelliten handeln. Weiters kommunizieren die Triebfahrzeuge über Mobilfunknachrichten 27 miteinander. Der Lokführer kann sich damit direkt zur anderen Vorrichtung 1 mittels Handy verbinden. Insbesondere kann die Verbindung automatisch bei der Abfahrt zum Steuermodul des besetzten Triebfahrzeugs hergestellt werden. Bei einem Ereignis werden Informationen mit allen notwendigen Daten gleichzeitig zum Lokführer als SMS und über GPRS zu einem Server übertragen.

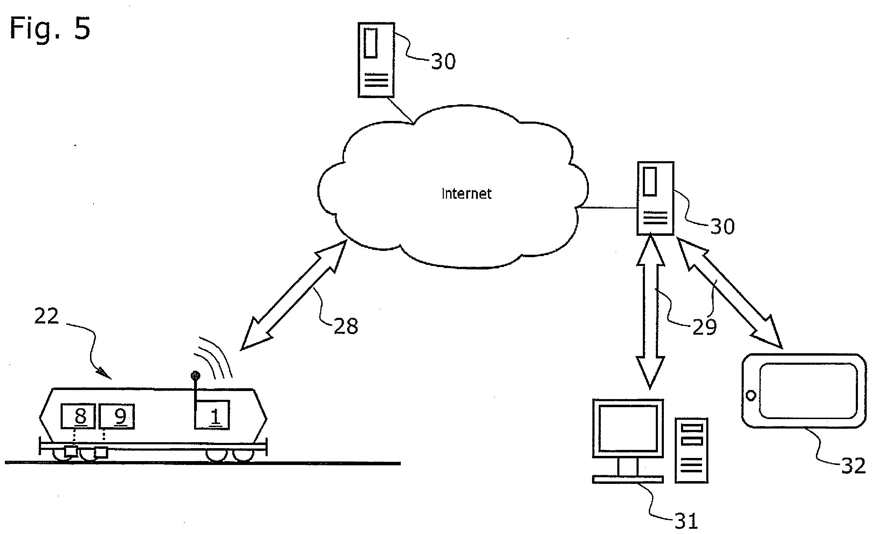

Fig. 5 zeigt ein weiteres Ausführungsbeispiel der erfindungsgemäßen Vorrichtung. Daten werden regelmäßig vom Triebfahrzeug 22 in Form von GPRS-Nachrichten über eine GPRS-Datenverbindung 28 an einen Server 30 im Internet gesendet, und vom Server beispielsweise über eine Netzwerkverbindung 29 an Arbeitsplatzrechner 31 zur Auswertung, oder in Form von Abhilfetexten für den Triebfahrzeugsführer an ein Mobilfunkgerät 32, z.B. ein Smartphone, weitergeleitet. Dies ermöglicht die Analyse und Auswertung der Daten durch eigene Software (beispielsweise für Bremsdaten, Beschleunigung, Geschwindigkeit, Ort über Koordinaten, etc.).

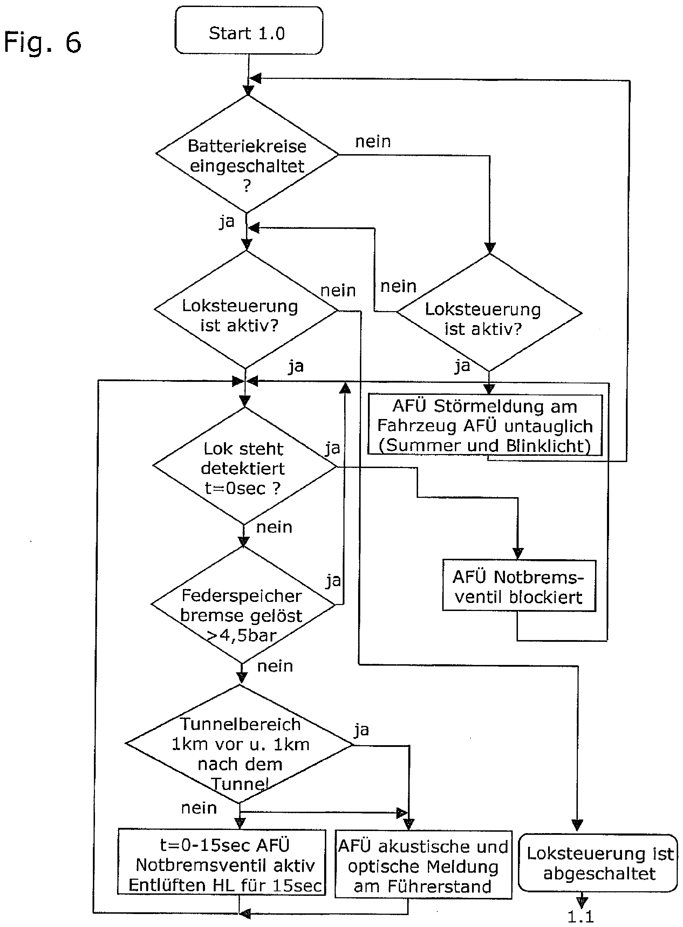

Fig. 6 zeigt ein Ausführungsbeispiel eines erfindungsgemäßen Verfahrens am Beispiel einer aktiven Loksteuerung durch aktivierten Führerstand oder im Fernsteuerbetrieb bzw. Funkfernsteuerung, bei dem während einer Positionsänderung (beim Fahren) der Federspeicherdruck überwacht wird. Es ist dargestellt wie eine Störung, beispielsweise ein Leitungsbruch beim Einlesen der Batteriekreise, gemeldet wird. Kann das Signal für abgeschaltete Batteriekreise durch z.B. einen Leitungsbruch nicht eingelesen werden, so wird mit dem Aktivieren der Loksteuerung eine Störmeldung durch Blinklicht und Summer am Triebfahrzeug ausgegeben. Im Fahrbetrieb bei aktiver Loksteuerung wird der Federspeicherdruck überwacht, wobei bei einem Druckverlust eine Zwangsbremsung ausgelöst wird. Im Tunnelbereich sowie am Stillstand wird das AFÜ Notbremsventil blockiert.

Beim Abschalten der Loksteuerung soll das Überwachungssystem aktiv werden. Dies ist durch den Schritt 1.1 am Ende des Flussdiagramms aus Fig. 6 angedeutet.

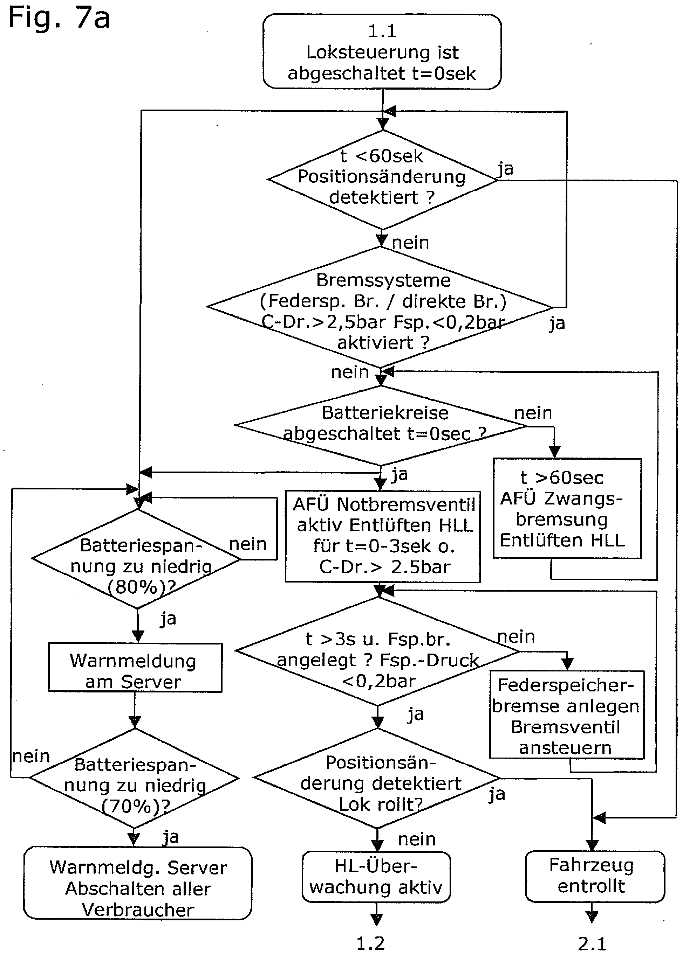

Fig. 7a zeigt das erfindungsgemäße Verfahren im Fall einer deaktivierten Loksteuerung. Wird nur die Loksteuerung deaktiviert und die Batteriekreise bleiben eingeschaltet, soll auch hier am Fahrzeugen überprüft werden, ob die Bremsen angelegt oder die Federspeicherbremsen gesetzt sind. Bei nicht angelegten Bremsen (direkte Bremse oder Federspeicherbremse) soll durch Entlüften der HLL das Fahrzeug nach 60 Sekunden eingebremst werden. Ein Schleppen in diesem Zustand soll automatisch durch das angesteuerte AFÜ-Notbremsventil verhindert werden.

Wird auch der Batteriehauptschalter ausgeschaltet bzw. die Batteriekreise abgeschaltet, soll für eine vordefinierte Zeitdauer, beispielsweise 3 Sekunden die HLL entlüftet werden und somit das Fahrzeug gezielt eingebremst werden. Anschließend sollen auch die Federspeicherbremsen automatisch angelegt werden. Bei abgestellten Fahrzeugen soll ständig die Batteriespannung überwacht und beim Erreichen einer definierten Spannung eine Meldung abgesendet werden. Erreicht die Batteriespannung einen kritischen Wert (z,B. 18V bei 24V Batteriespannung) sollen alle Verbraucher (ausgenommen die AFÜ selbst) abgeschaltet werden.

Beim Abschalten der Batteriekreise wird nach für drei Sekunden die HL entlüftet und anschließend die Federspeicherbremse gesetzt. Bei einer Positionsänderung wir die Diagnose Entrollen in der Steuerung gesetzt.

Bei einem abgestellten Fahrzeug sollen automatisch durch gezieltes Entlüften der Hauptluftleitung die Bremsen angelegt bzw. sollte das Anlegen der Federspeicherbremsen vergessen worden sein, sollen 3 Sekunden nach dem Abschalten des Batteriehauptschalters die Federspeicherbremsen automatisch gesetzt werden. Durch dieses Überwachungssystem soll ein Entrollen so gut es geht unmöglich werden.

Zusätzlich soll die Möglichkeit bestehen, über freie analoge Eingänge Signale abzugreifen, um ein schnelles Orten von z.B. flüchtigen Fehlern am Fahrzeug zu ermöglichen. Diese Signale sollen in Abhängigkeit der Zeit aufgezeichnet werden und über DFÜ an einem Server gesendet werden. Von diesem Server sollen diese Daten den jeweiligen Servicetechnikern zur Auswertung und Analyse zur Verfügung stehen.

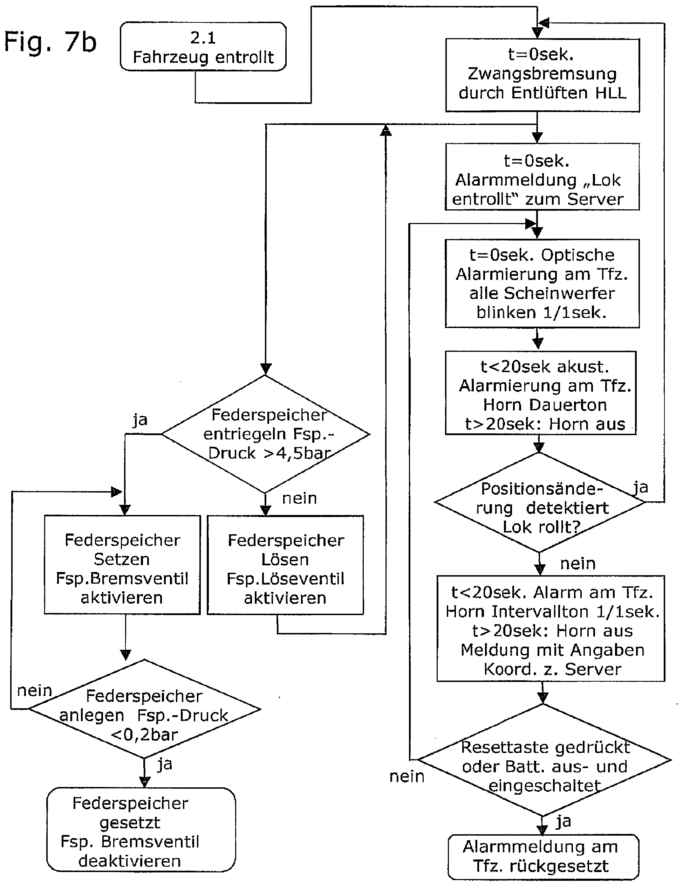

Fig. 7b zeigt das erfindungsgemäße Verfahren im Fall der Alarmierung beim Entrollen sowie das automatische Bremsen des Fahrzeuges in diesem Fall. Beim Entrollen eines Fahrzeuges wird automatisch die HL entlüftet und eine Alarmkette ausgelöst. Über GPRS-Pakete wird die Alarmmeldung mit Angaben der Koordinaten zum Server gesendet und gleichzeitig am Fahrzeug eine akustische und optische Warnmeldung abgegeben. Dies geschieht durch Blinken der Scheinwerfer und Dauerton so lange sich das Fahrzeug bewegt von mindesten zwei Hörnern für 20 Sekunden, wo nach dem Stillstand des Fahrzeuges die restliche Zeit der 20 Sekunden durch einen Intervallton von einer Sekunde Impuls-Pausenzeit das Signal abgegeben wird. Diese Alarmmeldung kann durch Aus- und Einschalten des Batteriehauptschalters oder durch eine Resettaste am Steuermodul rückgesetzt werden Mechanisch gelöste Federspeicherbremsen werden automatisch entriegelt, indem vorerst ein Lösebefehl abgegeben wird und beim Erreichen von >4,5bar die Federspeicherbremszylinder wieder durch den Setzbefehl entlüftet werden.

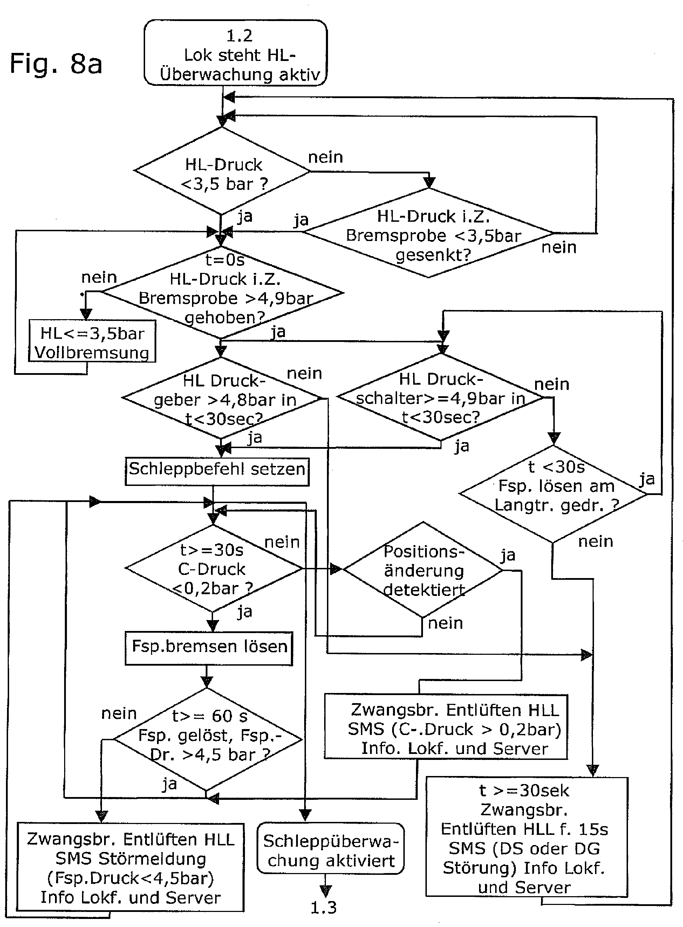

Fig. 8a zeigt das erfindungsgemäße Verfahren zur automatischen Bremsüberwachung vor einer Schleppfahrt. Wird das Fahrzeug gekuppelt, sollen im Zuge einer Bremsprobe und anschließendem Lösevorgang automatisch nach dem Entlüften der Bremszylinder die Federspeicherbremsen gelöst werden. Der Lokführer soll die Möglichkeit haben, eine Verbindung zum Steuermodul der AFÜ, durch Anwählen der jeweiligen Rufnummer der Vorrichtung, per Handy herstellen zu können. Lösen die Federspeicherbremsen innerhalb von 60 Sekunden nicht aus (abgesperrter Schlepphahn oder stark undichte Stellen im Federspeichersystem), soll eine Zwangsbremsung durch Entlüften der HLL eingeleitet werden. Ist eine Verbindung zur Steuerung hergestellt, soll der Lokführer automatisch über ein SMS informiert werden, sodass sofort entsprechende Maßnahmen eingeleitet werden können.

Beim Schleppen soll das Lösen oder Anlegen der Federspeicherbremsen automatisch erfolgen. Dies wird bei der AFÜ nicht wie bei den Fahrzeugen 1216 oder 189 (DB) durch eine rein pneumatische Lösung realisiert, sondern durch die Überwachung der dynamischen Vorgänge in der HLL mit entsprechender Sensorik und der daraus resultierenden Ansteuerung des Federspeicherwechselventils (Lösen und Bremsen).

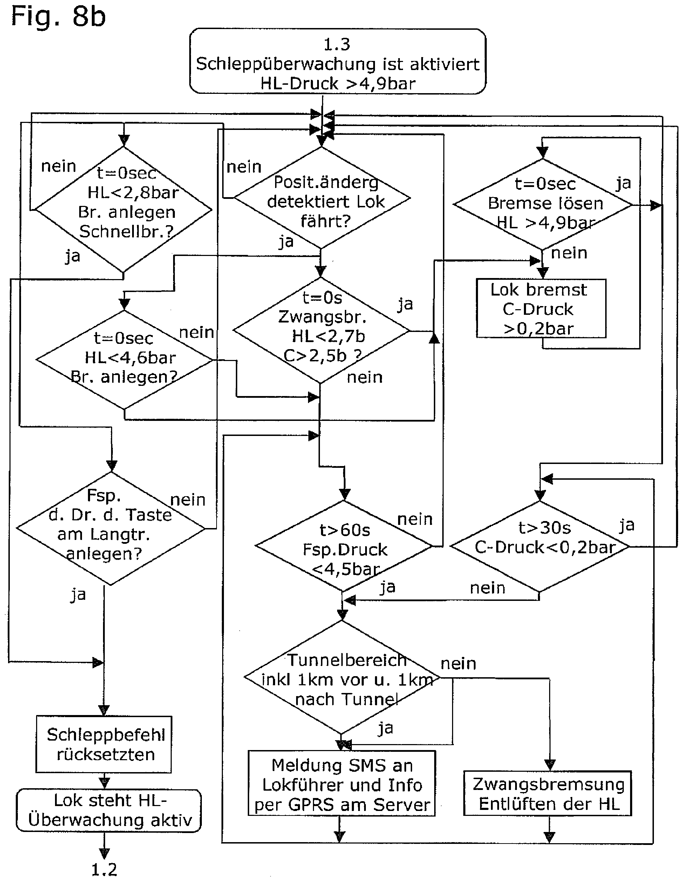

Fig 8b zeigt das erfindungsgemäße Verfahren zur automatischen Bremsüberwachung während einer Schleppfahrt. Überwacht während der Schleppfahrt wird der C-Druck, sowie der Federspeicher-Bremszylinderdruck. Im Tunnelbereich wird einen Kilometer vor und nach dem Tunnel eine durch die AFÜ ausgelöste Zwangsbremsung unterbunden. Die Meldung zum Lokführer sowie die Informationen über GPRS zum Server bleiben aufrecht.

Sollten sich während einer Schleppfahrt die Federspeicherbremsen selbsttätig anlegen oder Bremsen durch einen Restdruck im Bremszylinder (C-Druck >0,2bar) nicht vollständig auslösen, soll automatisch eine Zwangsbremsung eingeleitet werden um so Schäden an Radreifen bzw. Bremsaggregaten zu vermeiden.

Am Langträger soll im Zeitfenster von 30 Sekunden ein Lösevorgang ermöglicht werden, sollte der Druckschalter zum Bestätigen des HL-Druckes >=4,9bar defekt sein oder dieser Druck nicht erreicht werden. Letzteres könnte bei einem langen Zug möglich sein, wo mittels Füllstoß oder Angleichen ein Lösen ermöglicht werden könnte. Außer diesem Zeitfenster von 30 Sekunden nach einer Bremsprobe, soll ein Lösen der Federspeicherbremsen mittels Lösetaste am Langträger durch die AFÜ verhindert werden. Gleichzeitig soll der C-Druck der Bremssysteme überwacht werden, um ein vollständiges Auslösen aller Bremsen gewährleisten zu können. Während der Fahrt soll der Federspeicherbremszylinderdruck ständig überwacht werden. Bei einem Druckverlust im Federspeicher (Schlauchbruch oder stark undichte Stellen im Federspeichersystem) sollen Schäden an Radsätzen oder Bremsaggregaten durch selbsttätiges Anlegen der Federspeicherbremsen vermieden werden, indem eine Zwangsbremsung durch entlüften der HLL eingeleitet wird. Um sofort entsprechende Maßnahmen einleiten zu können, muss auch hier der Lokführer automatisch über ein SMS informiert werden,

Soll das Fahrzeug nach einer Schleppfahrt abgestellt werden, soll der Lokführer durch Senken der HLL unter 3bar die Federspeicherbremse am Fahrzeug setzen können. Der Verschieber kann so nach dem Absperren der UIC- Absperrhähne ein Aufdrücken dem Lokführer anordnen und das Fahrzeug entkuppeln.

Auch über die Bedienelemente der Federspeicherbremse am Langträger sollte die Möglichkeit bestehen, die Federspeicherbremsen anzulegen. Mit dem Anlegen der Federspeicherbremsen sollte automatisch der Schleppbefehl rückgesetzt werden und nach einer definierten Zeit die Verbindung zum Handy des Lokführers beendet werden.

Es können Fahrzeuge bei Schleppfahrten auch an einem Reisezug gekuppelt werden. Hier muss auch bei einer gezogenen Notbremse im Gefahrenbereichen wie z.B. im Tunnelbereich die Möglichkeit bestehen, diese durch die NBÜ zu überbrücken. Dies geschieht dadurch, dass eine Zwangsbremsung jeglicher Art dadurch verhindert wird, dass 1 Kilometer vor der Tunneleinfahrt das AFÜ-Notbremsventil unwirksam geschalten wird. Die Aktivierung des AFÜ-Notbremsventils erfolgt 1 Kilometer nach der Tunnelausfahrt, falls es sich um eine Auslösung durch die AFÜ handelt.

Aus diesem Grund darf der Schleppbefehl nur dann rückgesetzt werden, wenn bei Stillstand ein HL-Druck > 3 bar vorherrscht und dieser unter 2,8 bar abgesenkt wird. Im Tunnelbereich soll bei einem Ereignis (z.B. starker Druckverlust im Federspeicher durch Schlauchbruch) einen Kilometer vor und nach dem Tunnel das AFÜ-Notbremsventil unterdrückt werden, jedoch solange ein GSM-Empfang möglich ist soll das Meldesystem über GPRS an einem externen Server aufrecht erhalten bleiben. Anschließend soll durch die AFÜ eine Zwangsbremsung eingeleitet werden.

Bei einer Störung der AFÜ soll die Möglichkeit bestehen, durch Absperren der Hauptluftleitung vor dem AFÜ-Notbremsventil und elektrisches Abschalten durch Auslegen des AFÜ- Automaten, die AFÜ-Anlage abzuschalten. Eine Störmeldung durch Dauerlicht soll den abgeschalteten Zustand signalisieren. Beim Einschalten der Loksteuerung oder im Fernsteuerbetrieb, soll eine Redundanz durch ein zusätzliches Signal hergestellt werden, wo bei einem Ausfall eines dieser Signale, eine Störmeldung durch Dauerlicht diesen Zustand signalisieren soll. Mit diesem zusätzlichen Signal der aktivierten Loksteuerung, können Fehler wie z.B. Leiterbruch erkannt werden und durch eine Fehlermeldung entsprechend signalisiert und angezeigt werden. Bei Überwachungsfunktionen, die bei Störungen zur Folge eine Zwangsbremsung auslösen, soll eine akustische und optische Störmeldung durch Blinklicht und Summer abgegeben werden. Je nach Funktion oder Programmschritt, sollen diese Störmeldungen automatisch rückgesetzt werden, wobei auch das Notbremsventil wieder geschlossen wird. Grundsätzlich ist bei Störungen mit Blinklicht und Summer, vom Lokführer eine Handlung zu setzten. Die AFÜ erkennt Fehler am HL-Druckschalter oder HL-Drucksensor, da redundant vom Drucksensor eingelesen wird. Innerhalb von 30 Sekunden kommt es zur Zwangsbremsung. Durch Blinken der Meldelampen sowie akustisch über Summer mit gleichzeitiger Fehlermeldung "Druckschalter defekt" über DFÜ oder SMS, wird diese Störung angezeigt. Erkannt werden Leitungsunterbrechung (kleiner 2V) des Drucksensors. In diesem Fall wird dem Triebfahrzeugführer dies durch blinkende Meldelampen sowie akustisch über Summer und über eine definierte Störmeldung "Drucksensor defekt" (DFÜ oder SMS) signalisiert und gemeldet. Eine Weiterfahrt ist hier nach ausschalten der AFÜ möglich.

Durch einen Fehler, zum Beispiel durch Spannungsverschleppungen, könnte eine Fehlinterpretation in der Steuerung einen Schleppbefehl auslösen. Ein Schleppbefehl würde die Federspeicherbremsen lösen und eine akute Entroll-Gefahr würde bestehen. Dieser Setzbefehl zum Auslösen der Federspeicherbremse soll nur dann aktiv werden, wenn ein Druckabfall <3,5bar vom Druckgeber gemeldet wird und anschließend ein HL-Druck >=4,8bar durch den Druckgeber aber auch bei >=4,9bar vom Druckschalter der Steuerung übermittelt wird. Wird dieser Druck nur analog oder digital eingelesen, soll eine Zwangsbremsung nach 30 sec. eingeleitet werden. Eine entsprechende Störmeldung wird ausgegeben.

### Bezugszeichenliste

- 1: Vorrichtung
- 2: Pneumatisches Bremssystem
- 3: Fahrzeug
- 4: Drucksensor
- 5: Pneumatikmodul
- 6: Steuermodul
- 7: Positionsdaten
- 8: Druckluftbremssteuerung
- 9: Federspeicherbremssteuerung
- 10: Hauptluftleitung
- 11: Notbremsventil
- 12: Absperrhahn
- 13: Hauptbehälterleitung
- 14: Meldesystem
- 15: Antenne
- 16: Busanschluss
- 17: Antennenanschluss
- 18: Mittel zur Datenübertragung
- 19: Terminal
- 20: Diagnose- und Überwachungseinheit
- 21: Monitor am Fahrzeug
- 22: Triebfahrzeug
- 23: Waggon
- 24: UIC-Leitung
- 25: Druckluftbremszylinder
- 26: Federspeicherbremszylinder
- 27: Mobilfunknachricht
- 28: GPRS-Datenverbindung
- 29: Netzwerkverbindung
- 30: Server
- 31: Arbeitsplatzrechner
- 32: Mobilfunkgerät
- 33: GPS-System
- 34: GSM-Basisstation
- 35: Federspeicherwechselventil
- 36: Bewegungssensor
- 37: GSM-Modul
- 38: Federspeicherbremse
- 39: Druckluftbremse
- 40: CPU-Box
- 41: Signalleitung
- 42: Digitale und analoge Eingänge
- 43: Elektrischer Kompass
- 44: Digitale Informationen

## Patentansprüche

1. Vorrichtung (1) zur automatischen Überwachung und Steuerung der pneumatischen Bremssysteme (2) von Fahrzeugen (3), wobei die Vorrichtung (1) ein, den Luftdruck der Bremssysteme (2) durch Drucksensoren (4) überwachendes Pneumatikmodul (5) und ein damit verbundenes, ein oder mehrere Bremssysteme (2) ansteuerndes Steuermodul (6) umfasst, welches zum Empfang von Positionsdaten (7) des Fahrzeugs (3) ausgeführt ist, **dadurch gekennzeichnet, dass** die Vorrichtung batteriebetrieben ist und einen Bewegungssensor (36) sowie einen elektronischen Kompass (43) umfasst.

2. Vorrichtung nach Anspruch 1, **dadurch gekennzeichnet, dass** die Bremssysteme (2) zumindest eine Luftdruckbremse (39) und eine Federspeicherbremse (38) umfassen und das Pneumatikmodul (5) den Druck dieser Bremssysteme und den Druck einer Hauptluftleitung (10) empfangende Drucksensoren (4) umfasst und das Steuermodul (6) eine, eine Federspeichersteuerung (9) ansteuernde Signalleitung (41) umfasst.

3. Vorrichtung nach Anspruch 1 oder 2, **dadurch gekennzeichnet, dass** das Pneumatikmodul (5) ein, die Hauptluftleitung (10) entlüftendes, durch das Steuermodul (6) ansteuerbares Notbremsventil (11) umfasst.

4. Vorrichtung nach einem der Ansprüche 1 bis 3, **dadurch gekennzeichnet, dass** das Steuermodul (6) mit einem Meldesystem am Fahrzeug (3) verbindbar ist.

5. Vorrichtung nach einem der Ansprüche 1 bis 4, **dadurch gekennzeichnet, dass** das Steuermodul eine CPU-Box (37) umfasst, welche zumindest ein Mittel zur Datenübertragung (18) wie GSM-Modul, USB-Anschluss, Netzwerkanschluss, RS232-Schnittstelle, RS485-Schnittstelle, oder Busschnittstelle (16) und/oder zumindest einen Antennenanschluss (17) zur Verbindung mit einer GPS- und/oder GSM-Antenne aufweist.

6. Verfahren zur Überwachung und Steuerung der Bremssysteme (2) zur Entrollsicherung von abgestellten Fahrzeugen (3) mit einer Vorrichtung (1) nach einem der Ansprüche 1-5 zur automatischen Überwachung und Steuerung der pneumatischen Bremssysteme (2) von Fahrzeugen (3), wobei die Vorrichtung (1) ein, den Luftdruck der Bremssysteme (2) durch Drucksensoren (4) überwachendes Pneumatikmodul (5) und ein damit verbundenes, ein oder mehrere Bremssysteme (2) ansteuerndes Steuermodul (6) umfasst, welches zum Empfang von Positionsdaten (7) des Fahrzeugs (3) ausgeführt ist, **dadurch gekennzeichnet, dass** das Verfahren folgende Schritte umfasst:
a. Nach Abschalten der Loksteuerung erfolgt permanente Überwachung der Batteriespannung, der Bremssysteme (2) sowie Empfang und Überwachung von Positionsdaten (7);
b. beim Abschalten der Batteriekreise automatisches Entlüften der Hauptluftleitung (10) für mehrere Sekunden, insbesondere 3 Sekunden, jedoch bis sich ein C-Druck von beispielsweise >2bar aufgebaut hat und, wenn nach einer vordefinierter Zeitspanne die Federspeicherbremse (38) nicht aktiviert ist, Aktivieren der Federspeicherbremse (38);
c. bei Entrollen sofortige Zwangsbremsung durch Entlüften der Hauptluftleitung (10);
d. wenn nach einer vordefinierten Zeit ab dem Abschalten der Loksteuerung Bremssysteme (2) nicht aktiviert sind, erfolgt sofortige Zwangsbremsung durch Entlüften der Hauptluftleitung (10).

7. Verfahren nach Anspruch 6, **dadurch gekennzeichnet, dass** nach einer Zwangsbremsung das Auslösen einer Alarmkette in Form von Warnmeldungen per Email oder SMS an betroffene Stellen und Aktivierung akustischer und/oder optischer Warnsignale am Fahrzeug erfolgt.

8. Verfahren nach einem der Ansprüche 6 oder 7, **dadurch gekennzeichnet, dass** das Entrollen durch Überwachen von Positionsdaten (7) und/oder der Daten eines Bewegungssensors (36) oder Beschleunigungssensors festgestellt wird.

9. Verfahren nach einem der Ansprüche 6 bis 8, **dadurch gekennzeichnet, dass** eine Zwangsbremsung durch Entlüften der Hauptluftleitung (10) erfolgt, wenn 60 Sekunden nach dem Abschalten der Loksteuerung ein Bremssystem (2) nicht angelegt ist.

10. Verfahren zur Überwachung und Steuerung der Bremssysteme (2) von Fahrzeugen (3) im Schleppbetrieb mit einer Vorrichtung (1) nach einem der Ansprüche 1-5 zur automatischen Überwachung und Steuerung der pneumatischen Bremssysteme (2) von Fahrzeugen (3), wobei die Vorrichtung (1) ein, den Luftdruck der Bremssysteme (2) durch Drucksensoren (4) überwachendes Pneumatikmodul (5) und ein damit verbundenes, ein oder mehrere Bremssysteme (2) ansteuerndes Steuermodul (6) umfasst, welches zum Empfang von Positionsdaten (7) des Fahrzeugs (3) ausgeführt ist, **dadurch gekennzeichnet, dass** das Verfahren folgende Schritte umfasst:
a. Nach einer Bremsprobe erfolgt permanente Überwachung des Luftdrucks der pneumatischen Bremssysteme (2);
b. Einleitung einer Zwangsbremsung durch Entlüftung der Hautpluftleitung (10) wenn nach einer vordefinierten Zeitspanne zumindest eines der Bremssysteme (2) aktiviert wird oder nicht vollständig gelöst ist.

11. Verfahren nach Anspruch 10, **dadurch gekennzeichnet, dass** die Einleitung der Zwangsbremsung dann erfolgt, wenn 60 Sekunden nach der Bremsprobe aktivierte oder nicht vollständig gelöste Bremssysteme (2) festgestellt werden.

12. Verfahren nach Anspruch 10 oder 11, **dadurch gekennzeichnet, dass** am Ende der Schleppfahrt bei Stillstand eine Senkung des Drucks der Hauptluftleitung (10) unter 2,8 bar ein Anlegen der Federspeicherbremse (38) bewirkt.

13. Verfahren nach einem der Ansprüche 10 bis 12, **dadurch gekennzeichnet, dass** die Batteriespannung überwacht wird und beim Erreichen eines definierten Grenzwertes eine Warnmeldung abgesandt wird.

14. Verfahren nach einem der Ansprüche 10 bis 13, **dadurch gekennzeichnet, dass** durch manuelles Anlegen der Federspeicherbremse (38) an einem Langträger oder durch Entlüften der Hauptluftleitung (10) mittels eines UIC-Absperrhahns ein Schleppbefehl rückgesetzt wird und so die Federspeicherbremse (38) automatisch angelegt wird.

## Claims

1. A device (1) for automatically monitoring and controlling the pneumatic brake systems (2) of vehicles (3), wherein the device (1) comprises a pneumatic module (5) that monitors the air pressure of the brake systems (2) by means of pressure sensors (4) and a control module (6) that is connected to the pneumatic module and controls one or more brake systems (2), and wherein said control module is designed for receiving position data (7) of the vehicle (3), **characterized in that** the device is battery powered and comprises a motion sensor (36), as well as an electronic compass (43).

2. The device according to claim 1, **characterized in that** the brake systems (2) comprise at least one air brake (39) and one spring-loaded brake (38), **in that** the pneumatic module (5) comprises pressure sensors (4), which receive the pressure of these brake systems and the pressure of a main air pipe (10), and **in that** the control module (6) comprises a signaling line (41) for controlling a spring-loaded brake control (9).

3. The device according to claim 1 or 2, **characterized in that** the pneumatic module (5) comprises an emergency brake valve (11), which ventilates the main air pipe (10) and can be controlled by the control module (6).

4. The device according to one of claims 1-3, **characterized in that** the control module (6) can be connected to a signaling system on the vehicle (3).

5. The device according to one of claims 1-4, **characterized in that** the control module comprises a CPU box (37), which features at least one data transmission means (18) such as a GSM module, a USB port, a network connection, a RS232 interface, a RS485 interface or a bus interface (16) and/or at least one antenna connection (17) for being connected to a GPS antenna and/or GSM antenna.

6. A method for monitoring and controlling brake systems (2) in order to secure parked vehicles (3) from rolling off by means of a device (1) according to one of claims 1-5 for automatically monitoring and controlling the pneumatic brake systems (2) of vehicles (3), wherein the device (1) comprises a pneumatic module (5) that monitors the air pressure of the brake systems (2) by means of pressure sensors (4) and a control module (6) that is connected to the pneumatic module and controls one or more brake systems (2), and wherein said control module is designed for receiving position data (7) of the vehicle (3), **characterized in that** the method comprises the following steps:
a. permanently monitoring the battery voltage and the brake systems (2), as well as the reception of position data (7), after the engine control is deactivated;
b. automatically ventilating the main air pipe (10) for several seconds, particularly 3 seconds, but until a C- pressure, for example, of >2 bar has been built up, as well as activating the spring-loaded brake (38) if the spring-loaded brake (38) has not been activated after a predefined time period, when the battery circuits are deactivated;
c. immediate automatic application of the brakes by ventilating the main air pipe (10) if the vehicle rolls off; and
d. immediate automatic application of the brakes by ventilating the main air pipe (10) if the brake systems (2) have not been activated once a predefined time period starting with the deactivation of the engine control has elapsed.

7. The method according to claim 6, **characterized in that** an alarm chain in the form of warning messages via email or SMS to the concerned departments is triggered and acoustical and/or optical warning signals on the vehicle are activated after an automatic application of the brakes.

8. The method according to one of claims 6 or 7, **characterized in that** rolling off is detected by monitoring position data (7) and/or the data of a motion sensor (36) or acceleration sensor.

9. The method according to one of claims 6-8, **characterized in that** an automatic application of the brakes by ventilating the main air pipe (10) takes place if no brake system (2) has been applied 60 seconds after the engine control has been deactivated.

10. A method for monitoring and controlling brake systems (2) of vehicles (3) in the towing mode by means of the device (1) according to one of claims 1-5 for automatically monitoring and controlling the pneumatic brake systems (2) of vehicles (3), wherein the device (1) comprises a pneumatic module (5) that monitors the air pressure of the brake systems (2) by means of pressure sensors (4) and a control module (6) that is connected to the pneumatic module and controls one or more brake systems (2), and wherein said control module is designed for receiving position data (7) of the vehicle (3), **characterized in that** the method comprises the following steps:
a. permanently monitoring the air pressure of the pneumatic brake systems (2) after a brake test; and
b. initiating an automatic application of the brakes by ventilating the main air pipe (10) if at least one of the brake systems (2) is activated or not completely released after a predefined time period.

11. The method according to claim 10, **characterized in that** the automatic application of the brakes is initiated if activated or not completely released brake systems (2) are detected 60 seconds after the brake test.

12. The method according to claim 10 or 11, **characterized in that** lowering the pressure of the main air pipe (10) below 2.8 bar causes an application of the spring-loaded brake (38) once the vehicle comes to a standstill at the end of the tow.

13. The method according to one of claims 10-12, **characterized in that** the battery voltage is monitored and a warning message is transmitted once a defined limiting value is reached.

14. The method according to one of claims 10-13, **characterized in that** a towing command is reset by manually applying the spring-loaded brake (38) on a longitudinal beam or by ventilating the main air pipe (10) by means of a UIC stop valve in order to thereby automatically apply the spring-loaded brake (38).

## Revendications

1. Dispositif (1) pour le contrôle et la commande automatiques des systèmes de freins pneumatiques (2) de véhicules (3), le dispositif (1) comprenant un module pneumatique (5) contrôlant la pression d'air des systèmes de freins (2) par des capteurs de pression (4) et un module de commande (6) relié à celui-ci, commandant un ou plusieurs systèmes de freins (2), lequel est exécuté pour recevoir des données de position (7) du véhicule (3), **caractérisé en ce que** le dispositif est entraîné par une batterie et comprend un capteur de mouvement (36) ainsi qu'une boussole électronique (43).

2. Dispositif selon la revendication 1, **caractérisé en ce que** les systèmes de freins (2) comprennent au moins un frein pneumatique (39) et un frein à ressort accumulateur (38) et le module pneumatique (5) comprend des capteurs de pression (4) recevant la pression de ces systèmes de freins et la pression d'une conduite d'air principale (10) et le module de commande (6) comprend un câble de signaux (41) commandant une commande de frein à ressort accumulateur (9).

3. Dispositif selon la revendication 1 ou 2, **caractérisé en ce que** le module pneumatique (5) comprend une soupape de frein de secours (11) vidangeant la conduite d'air principale (10), pouvant être commandée par le module de commande (6).

4. Dispositif selon l'une quelconque des revendications 1 à 3, **caractérisé en ce que** le module de commande (6) peut être relié à un système de signalisation sur le véhicule (3).

5. Dispositif selon l'une quelconque des revendications 1 à 4, **caractérisé en ce que** le module de commande comprend un boîtier d'UC (Unité centrale) (37), lequel comporte au moins un moyen pour la transmission de données (18), comme un module GSM, une connexion USB, une connexion au réseau, une interface RS232, une interface RS485 ou une interface de bus (16) et/ou au moins une connexion d'antenne (17) pour la liaison avec une antenne GPS et/ou GSM.

6. Procédé pour le contrôle et la commande de systèmes de freins (2) pour la sécurité de déroulement de véhicules arrêtés (3) avec un dispositif (1) selon l'une quelconque des revendications 1-5, pour le contrôle et la commande automatiques des systèmes de freins pneumatiques (2) de véhicules (3), le dispositif (1) comprenant un module pneumatique (5) contrôlant la pression d'air des systèmes de freins (2) par des capteurs de pression (4) et un module de commande (6) relié à celui-ci commandant un ou plusieurs systèmes de freins (2), lequel est exécuté pour recevoir des données de position (7) du véhicule (3), **caractérisé en ce que** le procédé comprend les étapes suivantes :
a. après arrêt de la commande de locomotive a lieu un contrôle permanent de la tension de batterie, des systèmes de freins (2) ainsi que la réception et le contrôle des données de position (7),
b. à l'arrêt des circuits de batterie, purge automatique de la conduite d'air principale (10) pendant plusieurs secondes, notamment 3 secondes, toutefois jusqu'à ce qu'une pression C de > 2bars par exemple se soit accumulée et, si après un laps de temps prédéfini, le frein à ressort accumulateur (38) n'est pas activé, activation du frein à ressort accumulateur (38),
c. lors du déroulage, application automatique des freins immédiate par purge de la conduite d'air principale (10) ;
d. si après un temps prédéfini à partir de l'arrêt de la commande de locomotive, les systèmes de freins (2) ne sont pas activés, une application automatique des freins immédiate a lieu par purge de la conduite d'air principale (10).

7. Procédé selon la revendication 6, **caractérisé en ce qu'**après une application automatique des freins, a lieu le déclenchement d'une chaîne d'alarmes sous la forme de messages d'avertissement par courriels ou messages courts aux points concernés et d'activation de signaux d'avertissement acoustiques et/ou optiques sur le véhicule.

8. Procédé selon l'une quelconque des revendications 6 ou 7, **caractérisé en ce que** le déroulement est constaté par le contrôle des données de position (7) et/ou des données d'un capteur de mouvement (36) ou d'un capteur d'accélération.

9. Procédé selon l'une quelconque des revendications 6 à 8, **caractérisé en ce qu'**une application automatique des freins a lieu par purge de la conduit d'air principale (10), si 60 secondes après l'arrêt de la commande de locomotive, un système de freins (2) n'est pas mis en oeuvre.

10. Procédé pour le contrôle et la commande de systèmes de freins (2) de véhicules (3) en situation de remorquage avec un dispositif (1) selon l'une quelconque des revendications 1-5, pour le contrôle et la commande automatiques des systèmes de freins pneumatiques (2) de véhicules (3), le dispositif (1) comprenant un module pneumatique (5) contrôlant la pression d'air des systèmes de freins (2) par des capteurs de pression (4) et un module de commande (6) relié à celui-ci commandant un ou plusieurs systèmes de freins (2), lequel est exécuté pour recevoir des données de position (7) du véhicule (3), **caractérisé en ce que** le procédé comprend les étapes suivantes :
a. après un essai de freins, a lieu un contrôle permanent de la pression d'air des systèmes de freins pneumatiques (2),
b. initialisation d'une application automatique des freins par purge de la conduite d'air principale (10), si après un laps de temps prédéfini au moins un des systèmes de freins (2) est activé ou n'est pas complètement déclenché.

11. Procédé selon la revendication 10, **caractérisé en ce que** l'initialisation de l'application automatique des freins a lieu ensuite, si 60 secondes après l'essai de freins, on constate des systèmes de freins (2) activés ou pas complètement déclenchés.

12. Procédé selon la revendication 10 ou 11, **caractérisé en ce qu'**à la fin du trajet de remorquage, une baisse de pression de la conduite d'air principale (10) en dessous de 2,8 bars active à l'arrêt une mise en oeuvre du frein à ressort accumulateur (38).

13. Procédé selon l'une quelconque des revendications 10 à 12, **caractérisé en ce que** la tension de batterie est contrôlée et un message d'avertissement est envoyé lorsqu'une valeur limite définie est atteinte.

14. Procédé selon l'une quelconque des revendications 10 à 13, **caractérisé en ce que** par la mise en oeuvre manuelle du frein à ressort accumulateur (38), un ordre de remorquage est réinitialisé sur une longerine ou par purge de la d'air principale (10) au moyen d'un robinet d'arrêt UIC et qu'ainsi le frein à ressort accumulateur (38) est automatiquement mis en oeuvre.
